# EUROPEAN PATENT APPLICATION

(11) **EP 2 663 069 A1**
(43) Date of publication of application: **13.11.2013**
(21) Application number: 11854632.4
(22) Date of filing: 15.12.2011
(51) Int. Cl.: H04N 1/00, H04N 1/21, H04N 1/32

(54) **DIGITAL MULTIFUNCTION MACHINE AND NETWORK SYSTEM USING SAME**

(30) Priority: 07.01.2011 JP 2011002065
(71) Applicant: Murata Machinery, Ltd., Minami-ku Kyoto-shi Kyoto 601-8326 (JP)
(72) Inventor: KUWAHARA, Tetsuya, Kyoto-shi Kyoto 612-8686 (JP)
(74) Representative: Stöckeler, Ferdinand
(86) International application number: PCT/JP2011/079006
(87) International publication number: WO 2012/093570

(57) **Abstract**

To provide a technology of reducing the return number of digital multi-function apparatus while decreasing the storage capacity of the memory to which the electric power is supplied in the power-saving mode. The digital multi-function apparatus 3 is connected to the PC 1 via a network. The digital multi-function apparatus 3 includes a storage location information receiving section 353, and a storage location information memory 354. The storage location information receiving section 353 receives the storage location information 55 for the processing object data stored in the PC 1 from the PC 1 when the apparatus operates in the power-saving mode. The storage location information memory 354 stores the storage location information 55 received from the PC 1. The digital multi-function apparatus 3 accesses the data storage section 21 in the network in which the processing object data is stored, based on the storage location information 55 in the storage location information memory 354, if the power-saving mode is cleared. Then, the digital multi-function apparatus 3 acquires the processing object data via the network, and executes a predetermined process for the acquired processing object data.

## Description

### TECHNICAL FIELD

The present invention relates to a digital multi-function apparatus; particularly to a digital multi-function apparatus that is connected to a communication device via a network, and executes a predetermined process for a processing object data, based on an instruction from the communication device.

### BACKGROUND ART

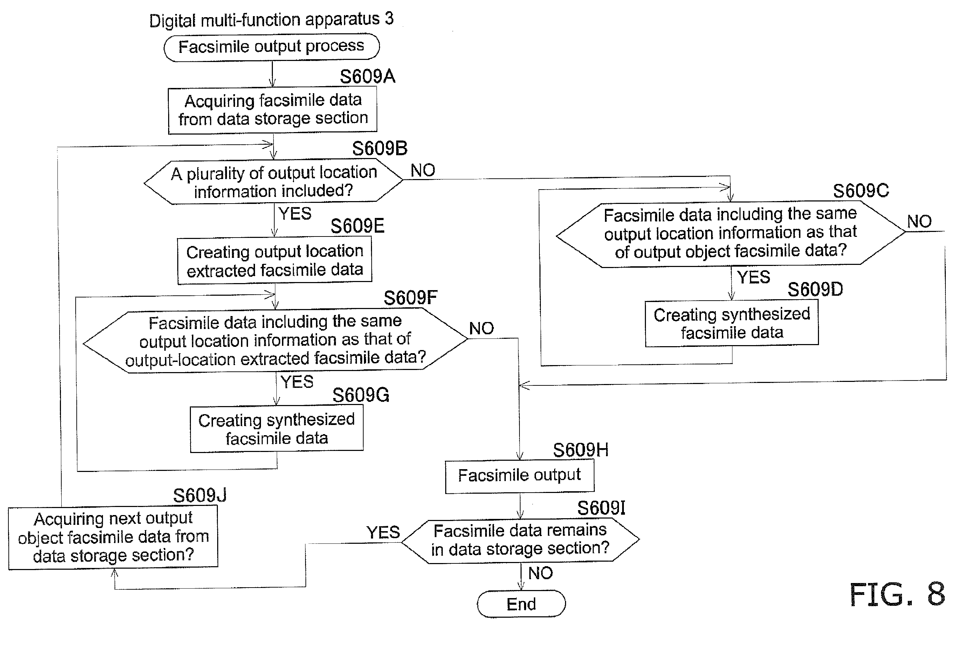

Japanese Laid-Open Patent Publication 2005-313489 (Patent Document 1) recites an image forming apparatus which can decrease the return number from power-saving mode (being the number of times a device returns from power-saving mode), and has a high power-saving effect. The image forming apparatus recited in Patent Document 1 shifts to a power-saving mode when the operation is suspended, and stores the print data into a HDD of the apparatus while continuing the power-saving mode at the time when print job is generated. Then, if the predetermined print start condition is satisfied, the image forming apparatus recited in Patent Document 1 returns from the power-saving mode, and prints the image data stored in the HDD of the apparatus (refer to [0036], [0040] through [0042] and Fig. 8, for example).

In Japanese Laid-Open Patent Application No. 2003-338894 (Patent Document 2), an image forming apparatus is recited that reduces power consumption by collecting the received data into one image forming apparatus, and outputting the data in a single operation at a predetermined time. The image forming apparatus recited in Patent Document 2 determines to which other image forming apparatus (image forming apparatus on a receiving side) the received data (print data) should be transmitted, when the apparatus shifts to the power-saving mode. Then, the image forming apparatus recited in Patent Document 2 transmits the print data, while in power-saving mode, to the image forming apparatus on a receiving side. Furthermore, in Patent Document 2, it is recited that if the image forming apparatus on a receiving side is in a power-saving mode, a storage device in the image forming apparatus on the receiving side stores the print data, and the stored print data is output in a single operation at a predetermined time (refer to [0009], for example).

### CITATION LIST

### PATENT LITERATURE

[Patent Document 1] Japanese Laid-Open Patent Publication 2005-313489
[Patent Document 2] Japanese Laid-Open Patent Application No. 2003-338894

### DISCLOSURE OF INVENTION

### TECHNICAL PROBLEM

The image forming apparatus recited in Patent Document 1 stores the received print data in the HDD of the apparatus if the apparatus is in a power-saving mode. Therefore, it is necessary to supply electric power to the memory even in the power-saving mode, and increase the storage capacity of the memory.

In Patent Document 2, if the image forming apparatus on a receiving side is in a power-saving mode, the storage device in the image forming apparatus on the receiving side stores the print data. Accordingly, it is necessary to supply electric power to the memory of the image forming apparatus on a receiving side in Patent Document 2 even if the apparatus is in the power-saving mode, and increase the storage capacity of the memory.

It is an object of the present invention to provide a technology to decrease the return number of a digital multi-function apparatus, while also reducing the storage capacity of the memory to which electric power is supplied in a power-saving mode.

### TECHNICAL SOLUTION

A digital multi-function apparatus recited in claim 1 is configured to be connected to a communication device via a network. The multi-function apparatus comprises a storage location information receiving section, a storage location information memory, a data acquisition section, and a process execution section. The storage location information receiving section is configured to receive storage location information of a processing object data stored by the communication device from the communication device if the apparatus operates in a power-saving mode. The storage location information memory is configured to store the storage location information received from the communication device if the apparatus operates in the power-saving mode. The data acquisition section is configured to access a data storage section in the network in which the processing object data is stored, and acquire the processing object data via the network, based on the storage location information in the storage location information memory if the power-saving mode is cleared. The process execution section is configured to execute a predetermined process for the processing object data acquired by the data acquisition section. If the apparatus is operating in the power-saving mode, supply of electric power to the data acquisition section and the process execution section is suspended. According to the digital multi-function apparatus, if the apparatus is in a power-saving mode, electric power is supplied only to the storage location information receiving section and the storage location information memory. In other words, in a digital multi-function apparatus, if the apparatus is in power-saving mode, the supply of electric power to the data acquisition section and process execution section is suspended.

The digital multi-function apparatus according to claim 2, is a multi-function apparatus recited in claim 1. The processing object data includes at least one of print data, and facsimile data including output location information that indicates an output location. The data acquisition section is configured to acquire at least one of the print data and the facsimile data. The process execution section is configured to execute a print output process using the print data if the data acquisition section acquires the print data, and execute a facsimile output process using the facsimile data based on the output location information if the data acquisition section acquires the facsimile data.

The digital multi-function apparatus according to claim 3 is a multi-function apparatus recited in claim 2 and further comprises a facsimile data synthesis section. If the data acquisition section acquires a plurality of facsimile data, the facsimile data synthesis section is configured to create synthesized facsimile data by synthesizing the facsimile date with each other having the same output location information from the plurality of facsimile data. The process execution section is configured to execute a facsimile output process using the synthesized facsimile data, based on the same output location information.

The digital multi-function apparatus according to claim 4 is a multi-function apparatus recited in claim 2, and further comprises a facsimile data edit section. The facsimile data edit section is configured to extract a single output location information from the plurality of output location information, and create output-location extracted facsimile data including the extracted output location information if the facsimile data acquired by the data acquisition section includes a plurality of output location information. The process execution section is configured to execute a facsimile output process using the output-location extracted facsimile data based on the extracted output location information.

The digital multi-function apparatus according to claim 5, is a multi-function apparatus recited in claim 4, and further comprises a facsimile data synthesis section. The facsimile data synthesis section is configured to create synthesized facsimile data by synthesizing facsimile data having the same output location information as the extracted output location information from the plurality facsimile data, and the output-location extracted facsimile data if the data acquisition section acquires a plurality of facsimile data. The process execution section is configured to execute a facsimile output process using the synthesized facsimile data, based on the extracted output location information.

The digital multi-function apparatus according to claim 6 is a multi-function apparatus recited in any of claims 2 through 5. The print data includes paper size information that indicates paper size for print output. The process execution section is configured to confirm printable sizes of the paper onto which the data can be output, and select the print data including paper size information corresponding to the sizes of the printable paper from the acquired plurality of the print data, and execute a print output process using the selected print data if the data acquisition section acquires a plurality of print data.

The digital multi-function apparatus according to claim 7 is a multi-function apparatus recited in any of claims 1 through 6, and further comprises a return timing notification section. The return timing notification section is configured to notify the communication device of a timing when the power-saving mode is cleared, when the apparatus operates in the power-saving mode.

A network system according to claim 8 comprises a communication device, and digital multi-function apparatus connected to the communication device via a network. The communication device includes a status confirmation section, a data transmission section, and a storage location information transmission section. The status confirmation section is configured to confirm whether or not the digital multi-function apparatus operates in a power-saving mode. The data transmission section is configured to store a processing object data into the data storage section by transmitting the processing object data to a data storage section in the network if the status confirmation section confirms that the digital multi-function apparatus operates in the power-saving mode. The storage location information transmission section is configured to transmit the storage location information of the processing object data to the digital multi-function apparatus. The digital multi-function apparatus includes a storage location information receiving section, a storage location information memory, a data acquisition section, and a process execution section. The storage location information receiving section is configured to receive the storage location information from the communication device if the apparatus operates in the power-saving mode. The storage location information memory is configured to store the received storage location information if the apparatus operates in the power-saving mode. The data acquisition section is configured to access the data storage section and acquire the processing object data via the network based on the storage location information in the storage location information memory if the power-saving mode is cleared. The process execution section is configured to execute a predetermined process for the processing object data acquired by the data acquisition section. If the apparatus is operating in the power-saving mode, supply of electric power to the data acquisition section and the process execution section is suspended.

### ADVANTAGEOUS EFFECT

According to the present invention, a digital multi-function apparatus receives, from a communication device, the storage location information for a processing object data stored in a communication device, and stores the received storage location information, when the apparatus operates in a power-saving mode. If the power-saving mode is cleared, the digital multi-function apparatus accesses the data storage section in the network in which the processing object data is stored, based on the stored storage location information. Then, the digital multi-function apparatus acquires the processing object data via the network, and executes a predetermined process for the acquired processing object data. In other words, when the apparatus operates in the power-saving mode, the digital multi-function apparatus does not store the processing object data but instead stores the storage location information for the processing object data stored in the communication device. The size of the storage location information is very small compared to the size of the processing object data. Accordingly, the storage capacity of the memory to which electric power is supplied in the power-saving mode can be reduced. Furthermore, if the power-saving mode is cleared, the processing object data is acquired and the predetermined process is executed for the acquired processing object data. Accordingly, the return number of the digital multi-function apparatus can be reduced.

### BRIEF DESCRIPTION OF DRAWINGS

Fig. 1 is a diagram of the configuration of the network system including a digital multi-function apparatus according to the present embodiment.
Fig. 2 is a flowchart illustrating a flow of the process of transmitting the print data of the PC 1 shown in Fig. 1.
Fig. 3 is a flowchart illustrating a flow of the process of transmitting the facsimile data of the PC 1 shown in Fig. 1.
Fig. 4 is a flowchart illustrating an output process in the ordinary mode of the digital multi-function apparatus shown in Fig. 1.
Fig. 5 is a flowchart illustrating the process of receiving the data storage location information in the power-saving mode of the digital multi-function apparatus shown in Fig. 1.
Fig. 6 is a flowchart illustrating the output process at clearing the power-saving mode of the digital multi-function apparatus shown in Fig. 1.
Fig. 7 is a flowchart illustrating the print output process in Fig. 6.
Fig. 8 is a flowchart illustrating the facsimile output process in Fig. 6.

### EMBODIMENTS FOR CARRYING OUT THE INVENTION

Below, an embodiment according to the present invention will be described in detail referring to the figures.

### [Configuration of the present embodiment]

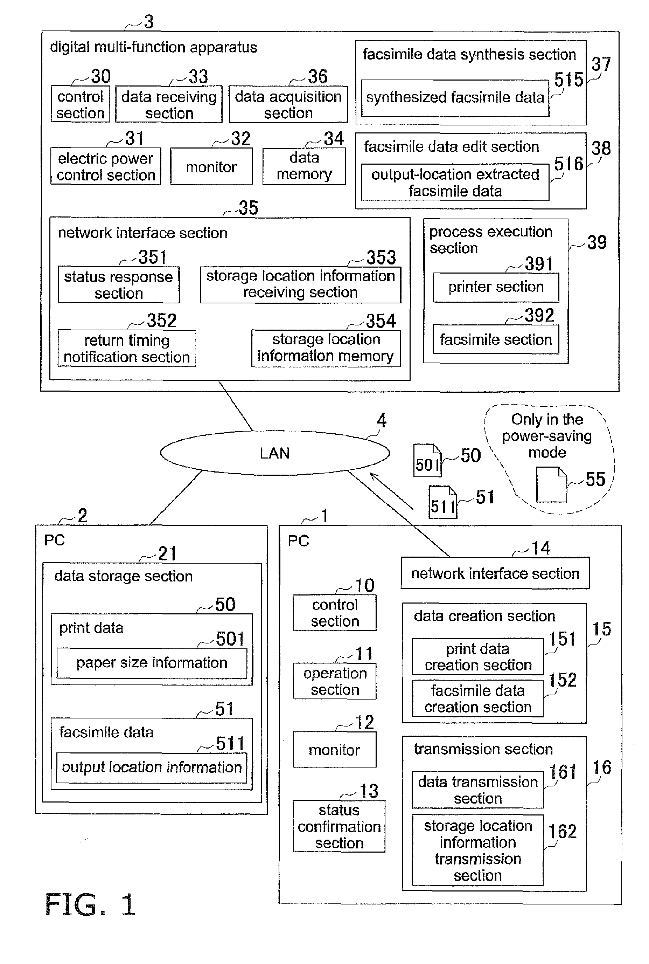

Referring to Fig. 1, the configuration of a network system according to the present invention will be described. The network system according to the present embodiment includes PCs (Personal Computers) 1 and 2, a digital multi-function apparatus 3, and a LAN (Local Area Network) 4.

The PCs 1 and 2 are communication devices. The PCs 1 and 2 are connected via the LAN 4 to the digital multi-function apparatus 3. The digital multi-function apparatus 3 is a multi-function apparatus including a printer function, a facsimile function, a scanner function, and a copy function. A user can use the printer function and the facsimile function of the digital multi-function apparatus 3 by operating the PC 1 to transmit a processing object data via the LAN 4.
The processing object data includes at least one of print data 50 and facsimile data 51. The print data 50 and the facsimile data 51, according to the present embodiment, include job data including image data, output management information of the image data, and so on. For example, in a case where a plurality of page data is output as printing or as facsimile by one job, each of the print data 50 and the facsimile data 51 includes a plurality of page data.

The PC 1 includes a control section 10, an operation section 11, a monitor 12, a status confirmation section 13, a network interface section 14, a data creation section 15, and a transmission section 16.

The control section 10 controls the operation of the PC 1. The control section 10 includes a CPU (Central Processing Unit), RAM (Random Access Memory), and so on. The operation section 11 is composed of a keyboard, a mouse, and so on. The monitor 12 is an LCD, for example.

The status confirmation section 13 confirms whether or not the digital multi-function apparatus 3 is in the power-saving mode. Specifically, the status confirmation section 13 uses SNMP (Simple Network Management Protocol) to confirm the operation status of the digital multi-function apparatus 3. For example, the status confirmation section 13 confirms whether or not the digital multi-function apparatus 3 is in an ordinary mode or in the power-saving mode. The detail of the operation status, e.g., details of the ordinary mode and the power-saving mode, will be described later.

The network interface section 14 is a section connected to the LAN 4, and controls the communication via the LAN 4. The network interface section 14 controls the communication based on TCP/IP (Transmission Control Protocol/Internet Protocol), for example.

The data creation section 15 includes a print data creation section 151, and a facsimile data creation section 152. The print data creation section 151 creates the print data 50 in accordance with an operation instruction from the user. The print data 50 includes paper size information 501 that indicates paper size for print output. For example, as the paper size information, sizes of the paper A4 and B4 are used. The facsimile data creation section 152 creates the facsimile data 51 in accordance with the operation instruction by the user. The facsimile data 51 includes output location information 511 that indicates the output location. For example, a facsimile number or a mail address can be used as the output location information 511.

The transmission section 16 includes a data transmission section 161, and a storage location information transmission section 162. The data transmission section 161 transmits the processing object data (at least one of the print data 50 and the facsimile data 51). If the status confirmation section 13 confirms that the digital multi-function apparatus 3 is in the ordinary mode, the data transmission section 161 transmits the processing object data for requesting the digital multi-function apparatus 3 to execute the predetermined process to the digital multi-function apparatus 3. If the status confirmation section 13 confirms that the digital multi-function apparatus 3 is in the power-saving mode, the data transmission section 161 transmits the processing data for requesting the digital multi-function apparatus 3 to execute the predetermined process to the PC 2 via the LAN 4, and to store the processing object data into the PC 2.

If the data transmission section 161 transmits the processing object data to the PC 2, the storage location information transmission section 162 transmits the storage location information 55 for the processing object data to the digital multi-function apparatus 3. The storage location information 55 is address information and directory information of the storage location (PC 2) for the processing object data. The storage location information transmission section 162 acquires the storage location information 55 for the processing object data (address information and directory information) from the data transmission section 161. Then, if the data transmission section 161 transmits the print data 50 to the PC 2, the storage location information transmission section 162 adds information that indicates the processing object data is the print data 50 to the storage location information 55. Furthermore, if the data transmission section 161 transmits the facsimile data 51 to the PC 2, the storage location information transmission section 162 adds information that indicates that the processing object data is the facsimile data 51 to the storage location information 55. In other words, the storage location information transmission section 162 transmits the storage location information 55 including the information that identifies types of processing object data to the digital multi-function apparatus 3.

The PC 2 is connected to the PC 1 and the digital multi-function apparatus 3 via the LAN 4. The PC 2 includes a data storage section 21. The data storage section 21 stores the processing object data received from the data transmission section 161.

Next, the digital multi-function apparatus 3 will be described. The digital multi-function apparatus 3 includes a control section 30, an electric power control section 31, a monitor 32, a data receiving section 33, a data memory 34, a network interface section 35, a data acquisition section 36, a facsimile data synthesis section 37, a facsimile data edit section 38, and a process execution section 39. It should be noted that in Fig. 1, process sections related to the scanner function and the copy function, of the digital multi-function apparatus 3 are omitted.

The control section 30 controls the operation of the digital multi-function apparatus 3. The control section 30 includes a CPU, RAM, and so on. The electric power control section 31 controls the electric power supplied to each of components of the digital multi-function apparatus 3 depending on the ordinary mode and power-saving mode. The monitor 32 is an LCD, for example.

The data receiving section 33 receives processing object data transmitted from the data transmission section 161 of the PC 1 when the digital multi-function apparatus 3 is being operated in the ordinary mode. The data memory 34 stores the processing object data received by the data receiving section 33.

The network interface section 35 is a section connected to the LAN 4, and controls the communication via the LAN 4. The network interface section 35 controls the communication based on TCP/IP, for example. The network interface section 35 includes a status response section 351, a return timing notification section 352, a storage location information receiving section 353, and a storage location information memory 354.

The status response section 351 executes a process of responding to a SNMP message received from the status confirmation section 13 of the PC 1.

The return timing notification section 352 notifies the PC 1 of the timing when the power-saving mode is cleared when the digital multi-function apparatus 3 is operating in the power-saving mode.

The storage location information receiving section 353 receives the storage location information 55 for the processing object data stored in the PC 1 from the storage location information transmission section 162 of the PC 1 when the digital multi-function apparatus 3 is operating in the power-saving mode. The storage location information memory 354 stores the storage location information 55 received from the storage location information transmission section 161 of the PC 1, when the digital multi-function apparatus 3 is operating in the power-saving mode.

The data acquisition section 36 refers to the storage location information memory 354 and determines whether or not the storage location information 55 is stored when the power-saving mode of the digital multi-function apparatus 3 is cleared. If the storage location information 55 is stored in the storage location information memory 354, the data acquisition section 36 uses the storage location information 55 to access the data storage section 21 of the PC 2 in which the processing object data is stored. Then, the data acquisition section 36 acquires the processing object data via the LAN 4. The data memory 34 stores the processing object data acquired by the data acquisition section 36.

If the data acquisition section 36 acquires a plurality of facsimile data 51, the facsimile data synthesis section 37 creates synthesized facsimile data 515 by synthesizing facsimile data 51 having the same output location information 511.

If the facsimile data 51 acquired by the data acquisition section 36 includes a plurality of output location information 511, the facsimile data edit section 38 extracts individual output location information 511 from the plurality of output location information 511. Then, the facsimile data edit section 38 creates output-location extracted facsimile data 516 including the extracted output location information 511.

The process execution section 39 executes a predetermined process for the processing object data (the print data 50 and the facsimile data 51) acquired by the data acquisition section 36. The process execution section 39 includes a printer section 391 and a facsimile section 392.

If the data acquisition section 36 acquires print data 50, the printer section 391 executes a print output process for the print data 50. Specifically, if the data acquisition section 36 acquires a plurality of print data 50, the printer section 391 confirms a printable paper size to which the digital multi-function apparatus 3 can print. The printable paper size is the size of the paper set in the digital multi-function apparatus 3. In this example, papers with a plurality of printable paper sizes are set in the digital multi-function apparatus 3. The digital multi-function apparatus 3 selects print data 50 including paper size information 501 from the acquired plurality of print data 50. The paper size information 501 corresponds to the printable paper sizes. The digital multi-function apparatus 3 preferentially executes the print output process for the selected print data 50.

If the data acquisition section 36 acquires the facsimile data 51, the facsimile section 392 executes a facsimile output process for the facsimile data 51. Specifically, the facsimile section 392 executes the facsimile output process of the facsimile data 51 acquired by the data acquisition section 36 based on the output location information 511. The facsimile section 392 executes the facsimile output process for the synthesized facsimile data 515 based on the same output location information 511. The facsimile section 392 executes the facsimile output process for the output-location extracted facsimile data 516 based on the extracted output location information 511.

### [Ordinary mode and power-saving mode]

Next, the operation status of the digital multi-function apparatus 3 will be described. The digital multi-function apparatus 3 operates either in the ordinary mode or the power-saving mode, with different power consumption, based on the use conditions of the user.

The ordinary mode is a mode in which the electric power is supplied to the entire digital multi-function apparatus 3. The digital multi-function apparatus 3 can be divided into a main body process section, the network interface section 35, and the process execution section 39, as units to which the power is supplied. The main body process section includes the control section 10 and an operation panel (not shown in the figures), for example. In the ordinary mode, the electric power control section 31 supplies the electric power to the main body process section, the network interface section 35, and the process execution section 39.

In the power-saving mode, the electric power is supplied only to the network interface section 35. In the power-saving mode, the electric power is neither supplied to the main body process section nor the process execution section 39. Accordingly, in the power-saving mode, it is impossible to execute the print output process and facsimile output process, for example.

For example, the digital multi-function apparatus 1 shifts from the ordinary mode to the power-saving mode after a certain period passes after the apparatus operates in accordance with an instruction from the user. Then, if the user presses a button for clearing the power-saving mode, or a time the user designated comes, the digital multi-function apparatus 3 clears the power-saving mode, and returns to the ordinary mode.

### [Operation of the present embodiment]

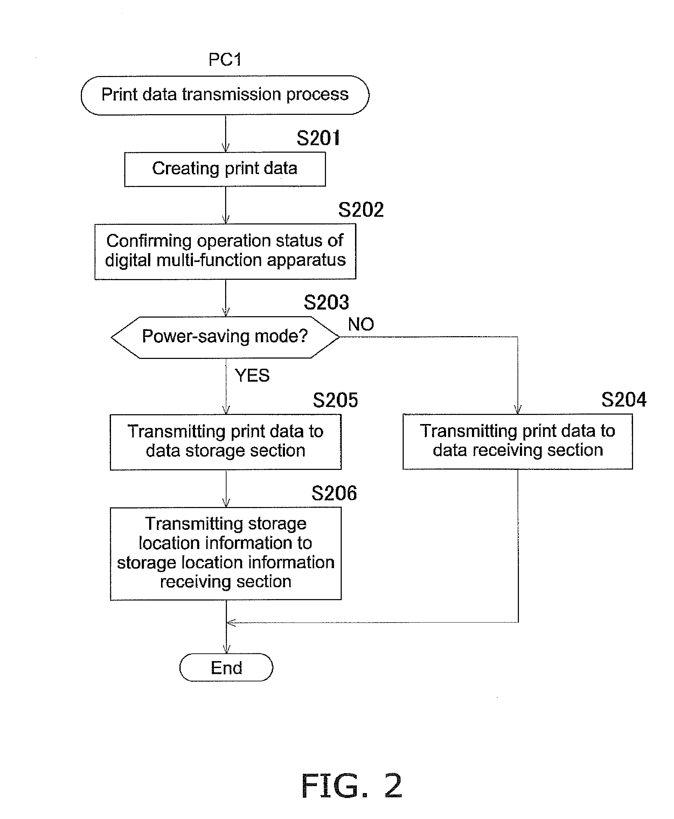

The operation of the network system according to the present embodiment will be described referring to Fig. 2 through Fig. 8.

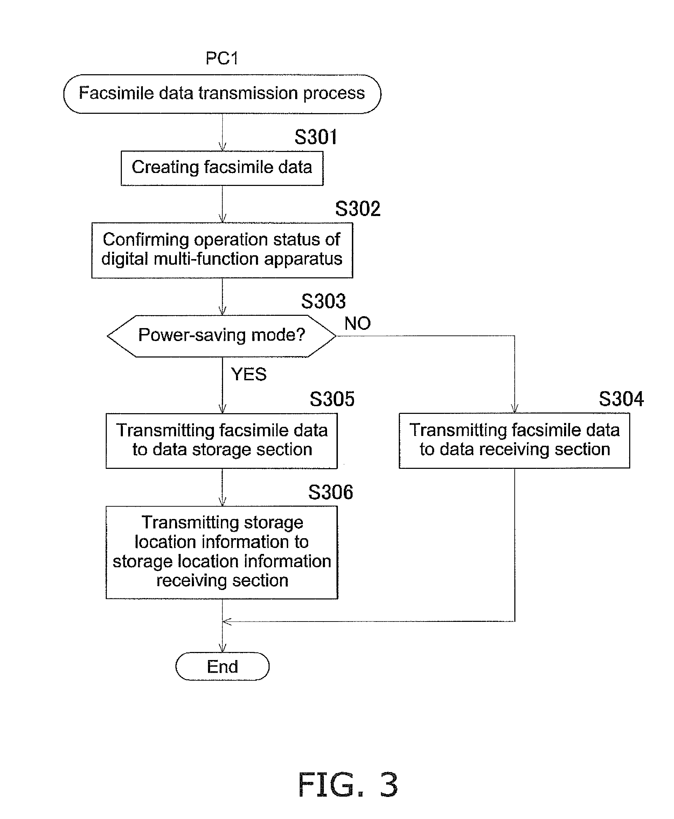

First, referring to Fig. 2 and Fig. 3, the operation of the PC 1 will be described. Fig. 2 is a flowchart that indicates a process of the PC 1 to transmit the print data 50 (print data transmission process). The print data transmission process is started when the user operates the operation section 11 to instruct the digital multi-function apparatus 3 to execute a process of outputting the print data 50.

If the process of transmitting the print data 50 is instructed, the print data 50 is created (step S201). Specifically, the print data creation section 151 determines a paper size for outputting the print data 50 based on the settings of the document made by the user. The print data creation section 151 creates the print data 50 including paper size information 501. The paper size information 501 is information that indicates the determined paper size.

After the process of step S201, the status confirmation section 13 confirms the operation status of the digital multi-function apparatus 3 using SNMP (step S202). Specifically, the status confirmation section 13 of the PC 1 transmits a request for confirming the operation status of the digital multi-function apparatus 3 (confirmation request). The network interface section 35 of the digital multi-function apparatus 3 holds operation status information that indicates the operation status of the digital multi-function apparatus 3. The status response section 351 creates response information into which MIB (Management Information Base) is set based on the operation status information. Then, the status response section 351 transmits the response information as a response to the above-described confirmation request.

After the process of step S202, the status confirmation section 13 determines whether or not the digital multi-function apparatus 3 operates in the power-saving mode based on the received response information (step S203).

If the digital multi-function apparatus 3 operates in the ordinary mode (NO at step S203), the print data 50 created at the process of step S201 is transmitted to the data receiving section 33 of the digital multi-function apparatus 3 (step S204). Accordingly, the print data transmission process of the PC 1 is finished.

If the digital multi-function apparatus 3 is in the power-saving mode (YES at step S203), the storage location information transmission section 162 transmits the print data 50 created in the process of step S201 to the data storage section 21 of the PC 2 (step S205). At this time, the storage location information transmission section 162 acquires the storage location information 55 (address information and directory information) of the print data 50, from the data transmission section 161. Then, the storage location information transmission section 162 adds information that the processing object data is the print data 50 to the storage location information 55. Accordingly, the storage location information transmission section 162 creates the storage location information 55 which includes information that identifies types of processing object data.

After the process of step S205, the storage location information transmission section 162 transmits the created storage location information 55 to the storage location information receiving section 353 of the digital multi-function apparatus 3 (step S206). Accordingly, the print data transmission process of the PC 1 is finished.

Fig. 3 is a flowchart showing a process of the PC 1 to transmit the facsimile data 51 (the facsimile data transmission process). The facsimile data transmission process is started when a user operates the operation section 11 to instruct a process of transmitting the facsimile data 51.

If the transmission process of the facsimile data 51 is instructed, the facsimile data 51 is created (step S301). Specifically, the user decides the output location of the facsimile data 51. Then, the facsimile data creation section 152 creates the facsimile data 51 which includes output location information 511. The output location information 511 is information that indicates the output location decided by the user.

After the process of step S301, similar to the process of step S202 through S203, the status confirmation section 13 confirms the operation status of the digital multi-function apparatus 3 (step S302 through S303).

If the digital multi-function apparatus 3 is in the ordinary mode (NO at step S303), the facsimile data 51 created at the process of step S301 is transmitted to the data receiving section 33 of the digital multi-function apparatus 3 (step S304). Accordingly, the facsimile data transmission process is finished.

If the digital multi-function apparatus 3 is in the power-saving mode (YES at step S303), the storage location information transmission section 162 transmits the facsimile data 51 created at the process of step S301 to the data storage section 21 of the PC 2 (step S305). At this time, the storage location information transmission section 162 acquires the storage location information 55 (address information and directory information) of the facsimile data 51 from the data transmission section 161. Then, the storage location information transmission section 162 adds information that indicates the processing object data is the facsimile data 51 to the acquired storage location information 55. Accordingly, the storage location information transmission section 162 creates the storage location information 55 which includes information that identifies types of processing object data.

After the process of step S305, the storage location information transmission section 162 transmits the created storage location information 55 to the storage location information receiving section 353 of the digital multi-function apparatus 3 (step S306). Accordingly, the facsimile data transmission process of the PC 1 is finished.

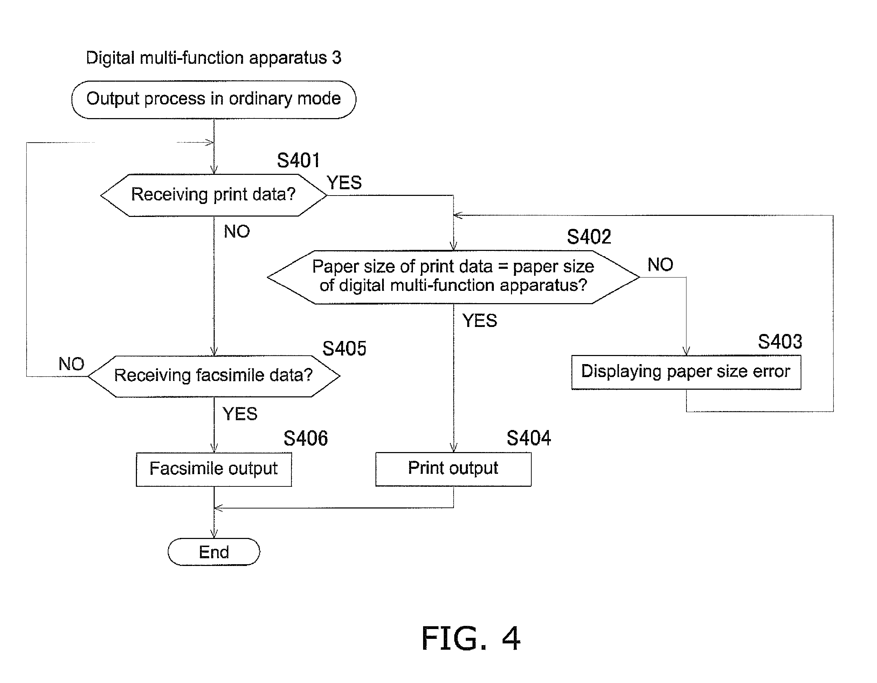

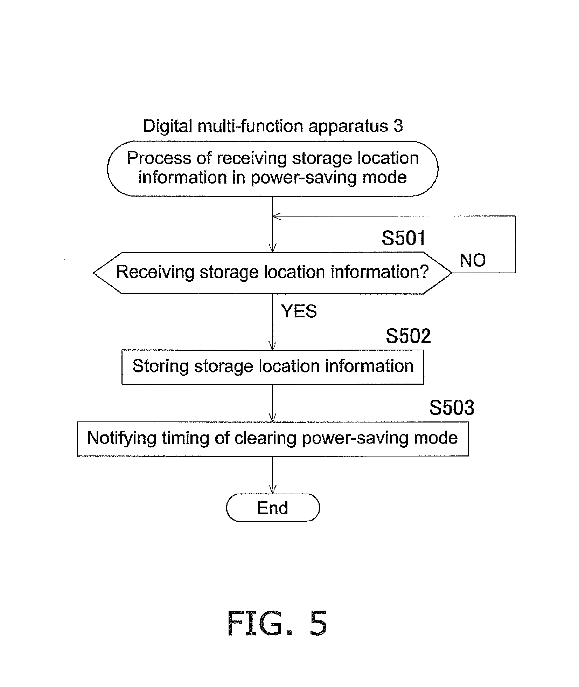

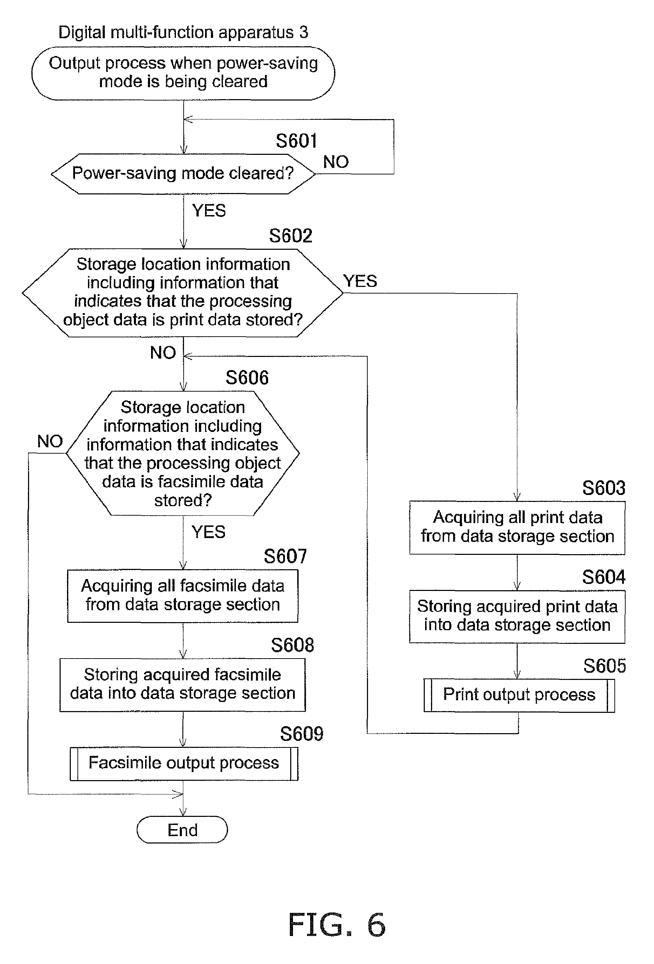

Next, referring to Fig. 4 through Fig. 8, the operation of the digital multi-function apparatus 3 will be described. The operation of the digital multi-function apparatus 3 can be divided into an output process in the ordinary mode shown in Fig. 4, the storage location information receiving process in the power-saving mode shown in Fig. 5, and an output process when the power-saving mode is being cleared shown in Fig. 6.

Referring to Fig. 4, the output process in the ordinary mode will be described. The output process in the ordinary mode is always operated if the digital multi-function apparatus 3 is in the ordinary mode.

First, it is determined whether or not the data receiving section 33 has received the print data 50 (step S401).

If the data receiving section 33 receives the print data 50 (YES at step S401), the printer section 391 determines whether or not the size information 501 corresponds to the printable paper sizes (sizes of the paper set in the digital multi-function apparatus 3) (step S402). The size information 501 is included in the received print data 50.

If the size information 501 of the print data 50 does not correspond to the printable paper sizes (NO at step S402), the monitor 32 of the digital multi-function apparatus 3 displays "paper size error" (step S403). Accordingly, the user can confirm that the print data 50 can not be printed out. Then, after the process of step S403 is executed, the process returns to step S402. Although an example was described in which the process returns to step S402 after step S403, the process may return to step S401 after S403.

If the size information 501 in the print data 50 corresponds to the printable paper sizes (YES at step S402), the printer section 391 prints out the print data 50 to paper set in the digital multi-function apparatus 3 (step S404). Accordingly, the output process during the ordinary mode is finished. Even if the output process during the ordinary mode is finished, if the digital multi-function apparatus 3 is in the ordinary mode, the process of step S401 is executed again.

If the data receiving section 33 has not received the print data 50 (NO at step S401), it is determined whether or not the data receiving section 33 has received the facsimile data 51 (step S405). If the data receiving section 33 has not received the facsimile data 51 (NO at step S405), the process returns to step S401.

If the data receiving section 33 has received the facsimile data 51 (YES at step S405), the facsimile section 392 outputs the facsimile data 51 by facsimile (step S406). Specifically, the facsimile section 392 outputs the facsimile data 51 by facsimile to an output location indicated by the output location information 511. The output location information 511 is included in the facsimile data 51. As described above, the output process during the ordinary mode is finished. Even if the output process during the ordinary mode is finished, if the digital multi-function apparatus 3 is in the ordinary mode, the process of step S401 is executed again.

Next, referring to Fig. 5, the storage location information receiving process in the power-saving mode will be described. The storage location information receiving process is always executed when the digital multi-function apparatus 3 is in the power-saving mode.

First, it is determined whether or not the storage location information receiving section 353 has received the storage location information 55 from the storage location information transmission section 162 of the PC 1 (step S501).

If the storage location information receiving section 353 has not received the storage location information 55 from the storage location information transmission section 162 of the PC 1 (NO at step S501), the process of step S501 is executed again.

If the storage location information receiving section 353 has received the storage location information 55 from the storage location information transmission section 162 of the PC 1 (YES at step S501), the storage location information memory 354 stores the storage location information 55 received by the storage location information receiving section 353 (step S502).

After the process of step S502 is executed, the return timing notification section 352 notifies the PC 1 of timing when the power-saving mode is cleared, and the status returns to the ordinary mode (below, referred to as "return timing") (step S503). Specifically, the return timing notification section 352 holds the return timing designated by the user, and notifies the PC 1 of the return timing. Accordingly, the storage location information receiving process in the power-saving mode is finished. Even if the storage location information receiving process in the power-saving mode is finished, if the digital multi-function apparatus 3 is in the power-saving mode, the process of step S501 is executed again.

According to the above-described process of step S503, a user of the PC 1 can confirm the timing when the status of the digital multi-function apparatus 3 returns from the power-saving mode to the ordinary mode even when the digital multi-function apparatus 3 is in the power-saving mode. In other words, the user of the PC 1 can confirm the timing when the digital multi-function apparatus 3 starts the print output process and facsimile output process.

Although in the process of the above-described step S503, the return timing notification section 352 determines the timing designated by the user as the return timing, the return timing is not limited to the above-described example. For example, it can be determined that the time after a certain period passes after shifting to the power-saving mode is the return timing.

Next, referring to Fig. 6, the output process when the power-saving mode is being cleared will be described. The output process when the power-saving mode is being cleared is always operated when the digital multi-function apparatus 3 is being in the power-saving mode.

First, it is determined whether or not the power-saving mode is cleared (step S601). Specifically, if the user presses the button for clearing the power-saving mode or a certain period has passed after shifting to the power-saving mode, for example, the digital multi-function apparatus 3 clears the power-saving mode and returns to the ordinary mode.

If the power-saving mode is cleared (YES at step S601), it is determined whether or not the storage location information 55, which includes information that indicates that the processing object data, is the print data 50, is stored in the storage location information memory 354 (step S602).

If the storage location information 55 is stored in the storage location information memory 354 (YES at step S602), the data acquisition section 36 acquires all of the print data 50 stored in the data storage section 21 (step S603). Specifically, the data acquisition section 36 accesses the data storage section 21, which stores the print data 50, based on the storage location information 55, and acquires the print data 50 via the LAN 4. Then, the print data 50 acquired by the data acquisition section 36 is deleted from the data storage section 21.

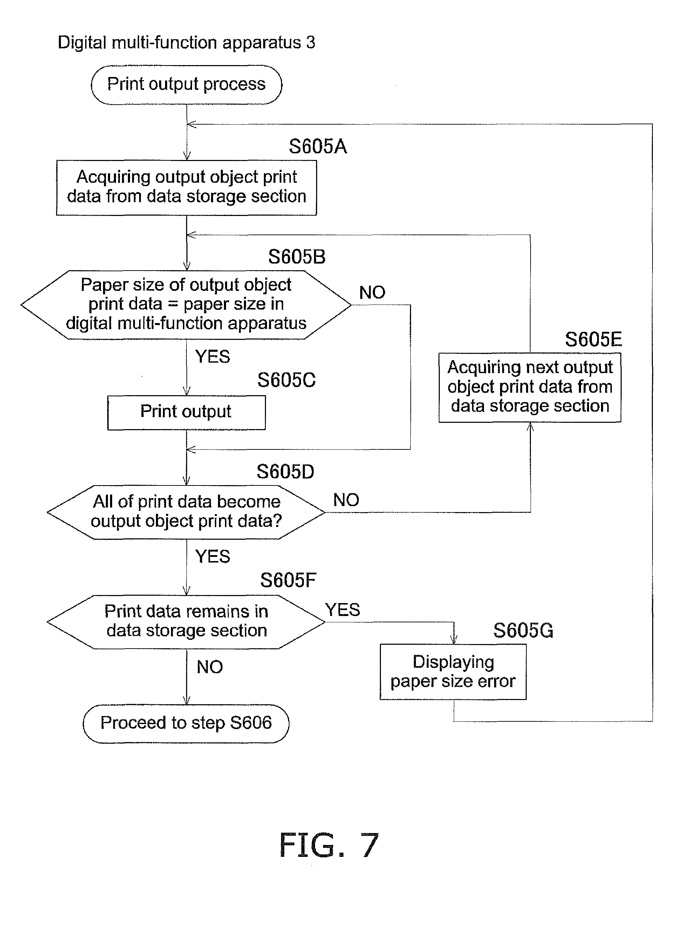

After the process of step S603, the print data 50 acquired by the data acquisition section 36 is stored into the data memory 34 (step S604). After that, the print output process is executed (step S605). Fig. 7 is a flowchart showing the print output process.

The printer section 391 acquires the print data 50 from the data memory 34 (step S605A). Specifically, the printer section 391 determines the print data 50 as an object of the print output (below, referred to as "output object print data") among the print data 50 stored in the data memory 34, and acquires the output object print data 50 from the data memory 34.

After the process of step S605A, the printer section 391 determines whether or not the size information 501 included in the output object print data 50 corresponds to the printable paper sizes (size of the paper set in the digital multi-function apparatus 3) (step S605B).

If the size information 501 included in the output object print data 50 corresponds to the printable paper sizes (YES at step S605B), the printer section 391 outputs by print the output object print data 50 (step S605C). At this time, the output object print data 50 is deleted from the data memory 34.

If the size information 501 included in the output object print data 50 does not correspond to the printable paper sizes (NO at step S605B), the process of step S605D is executed.

Then, it is determined whether or not all of the print data 50 stored in the data memory 34 has become the output object print data 50 (step S605D).

If all of the print data 50 stored in the data memory 34 has not become the output object print data 50 (NO at step S605D), the print data 50 which has not yet become the output object print data 50 among the print data 50 stored in the data memory 34 becomes the output object print data 50. Then, the output object print data 50 is acquired from the data memory 34 (step S605E), and the process returns to step 605B.

If all of the print data 50 stored in the data memory 34 has become the output object print data 50 (YES at step S605D), it is determined whether or not the print data 50 remains in the data memory 34 (step S605F).

If the print data 50 remains in the data memory 34 (YES at step S605F), the monitor 32 of the digital multi-function apparatus 3 displays "paper size error" (step S605G). Accordingly, the user can confirm that the print data 50 stored in the data memory 34 can not be printed out. Then, after the process of step S605G is executed, the process returns to step S605A.

If the print data 50 does not remain in the data memory 34 (NO at step S605F), the print output process is finished, and the process of step S606 in Fig. 6 is executed.

As described above, since the print data 50 includes the print size information 501, it is easy to determine whether or not the print data 50 corresponds to the printable paper sizes (the size of the paper set in the digital multi-function apparatus 3).

Furthermore, as described above, the printer section 391 selects the print data 50 which can be printed out among all of the print data 50 stored in the data memory 34. Then, the printer section 391 prints out the selected print data 50 (step S605A through S605E). After that, if there is the print data 50 which can not be printed out, the monitor 32 of the digital multi-function apparatus 3 displays "paper size error" (step S605G). In other words, the printer section 391 can preferentially print out the print data 50 which can be printed out.

Here, Fig. 6 will be referred to again. If the process of step S605 is finished, or the storage location information 55 is not stored in the storage location information memory 354 (NO at step S602), it is determined whether or not the storage location information 55 which includes information that indicates that the processing object data is the facsimile data 51 is stored in the storage location information memory 354 (step S606). The storage location information 55 includes information that indicates that the processing object data is the print data 50.

In step 606, if the above-described storage location information 55 is not stored in the storage location information memory 354 (NO at step S606), the output process when the power-saving mode is being cleared is finished.

In step 606, if the above-described storage location information 55 is stored in the storage location information memory 354 (YES at step S606), the data acquisition section 36 acquires all of the facsimile data 51 stored in the data storage section 21 (step S607). Specifically, the data acquisition section 36 accesses the data storage section 21 in which the facsimile data 51 is stored based on the storage location information 55. Then, the data acquisition section 36 acquires the facsimile data 51 via the LAN 4. Then, the facsimile data 51 acquired by the data acquisition section 36 is deleted from the data storage section 21.

After the process of step S607 is executed, the facsimile data 51 acquired by the data acquisition section 36 is stored into the data memory 34 (step S608). After that, the facsimile output process is performed (step S609). Fig. 8 is a flowchart showing the facsimile output process.

The facsimile section 392 acquires the facsimile data 51 from the data memory 34 (step S609A). Specifically, the facsimile section 392 determines the facsimile data 51 as an object of the facsimile output (below, referred to as "output object facsimile data") among the facsimile data 51 stored in the data memory 34. The facsimile section 392 acquires the determined output object facsimile data 51.

After the process of the step S609A, the facsimile data edit section 38 determines whether or not the output object facsimile data 51 includes a plurality of output location information 511 (step S609B). Specifically, the facsimile data edit section 38 determines whether or not the output object facsimile data 51 is output by facsimile to a plurality of output locations.

If the output object facsimile data 51 does not include a plurality of the output location information 511 (NO at step S609B), the facsimile data synthesis section 37 determines whether or not the facsimile data 51 are stored in the data memory 34, which includes the same output location information 511 as the output location information 511 included in the output object facsimile data 51 (step S609C). Specifically, the facsimile data synthesis section 37 determines whether or not the facsimile data 51 are stored in the data memory 34, which will be output to the same output location as the output location of the output object facsimile data 51.

In step 609C, if the above-described facsimile data 51 is stored in the data memory 34 (YES at step S609C), the synthesized facsimile data 515 is created (step S609D). Specifically, the facsimile data synthesis section 37 synthesizes the output object facsimile data 51 with the facsimile data 51 including the same output location information 511 as the output location information 511 of the output object facsimile data 51 (below, referred to as "synthesized object facsimile data"). Accordingly, the facsimile data synthesis section 37 creates synthesized facsimile data 515 which includes the same output location information 511 as the output location information 511 included in the output object facsimile data 51. Then, the facsimile data synthesis section 37 deletes the output location information 511 included in the output object facsimile data 51 from the output location information 511 included in the synthesized object facsimile data 51. At this time, the facsimile data synthesis section 37 deletes the synthesized object facsimile data 51 from which all of the output location information 511 is deleted, from the data memory 34. After that, the process returns to step 609C, and the process from steps 609C through 609D is repeated until the facsimile data 51 including the same output location information 511 as the output location information 511 included in the output object facsimile data 51 is not stored anymore in the data memory 34.

In step 609C, if the above-described facsimile data 51 is not stored in the data memory 34 (NO at step S609C), the output object facsimile data 51 or the synthesized facsimile data 515 is output by facsimile (step S609H). Specifically, the facsimile section 392 outputs the output object facsimile data 51 by facsimile to an output location indicated by the output location information 511 included in the output object facsimile data 51. Furthermore, the facsimile section 392 outputs by facsimile the synthesized facsimile data 515 created in the process of step S609D to an output location indicated by the output location information 511 included in the output object facsimile data 51. Then, the output object facsimile data 51 is deleted from the data memory 34. After that, the process of step S609I is executed.

If the output object facsimile data 51 includes a plurality of the output location information 511 (YES at step S609B), the output-location extracted facsimile data 516 is created (step S609E). Specifically, the facsimile data edit section 38 extracts single output location information 511 among a plurality of the output location information 511 included in the output object facsimile data 51. Then, the facsimile data edit section 38 creates the output-location extracted facsimile data 516 including the extracted output location information 511. Then, the facsimile data edit section 38 deletes the extracted output location information 511 among a plurality of the output location information 511 included in the output object facsimile data 51, and stores the output object facsimile data 51 as the facsimile data 51 into the data memory 34 after the process

After the process of step 609E is executed, the facsimile data synthesis section 37 determines whether or not the facsimile data 51 is stored in the data memory 34 (step S609F). The facsimile data 51 used at this time is data including the same output location information 511 as the output location information 511 included in the output-location extracted facsimile data 516. Specifically, the facsimile data synthesis section 37 determines whether or not the facsimile data 51 which is output to the same output location as the output location of the output-location extracted facsimile data 516 is stored in the data memory 34.

In step 609F, if the above-described facsimile data 51 is stored in the data memory 34 (YES at step S609F), the synthesized facsimile data 515 is created (step S609G). Specifically, the facsimile data synthesis section 37 synthesizes the output-location extracted facsimile data 516, and the facsimile data 51 including the same output location information 511 as the output location information 511 included in the output-location extracted facsimile data 516 (below, referred to as "synthesized object facsimile data"). Accordingly, the facsimile data synthesis section 37 creates the synthesized facsimile data 515 including the same output location information 511 as the output location information 511 included in the output-location extracted facsimile data 516. Then, the facsimile data synthesis section 37 deletes, from the output location information 511 included in the synthesized object facsimile data 51, the output location information 511 included in the output-location extracted facsimile data 51. At this time, the facsimile data synthesis section 37 deletes the synthesized object facsimile data 51 in which all of the output location information 511 are deleted, from the data memory 34. After that, the process returns to step 609F, and the process of steps 609F through 609G is repeatedly executed.

In step 609F, if the above-described facsimile data 51 is not stored in the data memory 34 (NO at step S609F), the output-location extracted facsimile data 516 or the synthesized facsimile data 515 is output by facsimile (step S609H). Specifically, the facsimile section 392 outputs by facsimile the output-location extracted facsimile data 516 to an output location indicated by the output location information 511 included in the output-location extracted facsimile data 516. Furthermore, the facsimile section 392 outputs by facsimile the synthesized facsimile data 516 created in the process of step S609G, to an output location indicated by the output location information 511 included in the output-location extracted facsimile data 516. Then, the output object facsimile data 51 is deleted from the data memory 34. After that, the process of step S609I is executed.

After the process of step S609H, it is determined whether or not the facsimile data 51 remains in the data memory 34 (step S609I).

If the facsimile data 51 remains in the data memory 34 (YES at step S609I), the facsimile section 392 determines the facsimile data 51 as an object of the facsimile output among the facsimile data 51 stored in the data memory 34 (below, referred to as "output object facsimile data"). The facsimile section 392 acquires the determined output object facsimile data 51 (step S605J), and the process returns to step 609B.

If the facsimile data 51 does not remain in the data memory 34 (NO at step S609I), the output process when the power-saving mode is cleared is finished.

As described above, the output object facsimile data 51 is deleted from the data memory 34 (step S609H). Furthermore, from the output location information 511 included in the synthesized object facsimile data 51, the output location information 511 in the output object facsimile data 51 is deleted (step S609D). Furthermore, from the output location information 511 included in the synthesized object facsimile data 51, the output location information 511 included in the output-location extracted facsimile data 51 is deleted (step S609G). Furthermore, the synthesized object facsimile data is deleted from the data memory 34 from which all of the output location information 511 have been deleted (steps S609D and S609G). Accordingly, it is possible to prevent the facsimile section 392 from redundantly outputting the facsimile data 51 by facsimile.

Furthermore, according to the present embodiment, the sequence is not executed, such as while outputting the facsimile data 51 by facsimile, the facsimile data 51 having the same output location as that of the facsimile data 51 is extracted from the data memory 34, and the extracted facsimile data 51 are sequentially output by facsimile. According to the present embodiment, the facsimile data synthesis section 37 synthesizes the facsimile data 51 having the same output location to create the synthesized facsimile data 515 (steps S609D and S609G). After that, the facsimile data synthesis section 37 outputs the created synthesized facsimile data 515 by facsimile (step S609H). Accordingly, it is possible to save waiting time during which the facsimile data 51 having the same output location of the facsimile data 51 is extracted from the data memory 34, after the facsimile output of one of the facsimile data 51 is finished.

Furthermore, according to the present embodiment, the facsimile data synthesis section 37 synthesizes the output-location extracted facsimile data 516 with the facsimile data 51 which will be output to the same output location as of the output-location extracted facsimile data 516, and outputs the synthesized facsimile data 51 by facsimile (steps S609F to S609H). Accordingly, the digital multi-function apparatus 3 according to the present embodiment can output the facsimile data 51 having the same output location by facsimile by one operation.

### [Effects of the present embodiment]

According to the present invention, when operating in the power-saving mode, the digital multi-function apparatus 3 receives the storage location information 55 of the processing object data (at least one data of the print data 50 and the facsimile data 51) stored in the PC 1 (step S501), and stores the received storage location information 55 (step S502). If the power-saving mode is cleared, the digital multi-function apparatus 3, accesses the data storage section 21 in the LAN 4 in which the processing object data is stored, based on the stored storage location information 55. Then, the digital multi-function apparatus 3 acquires the processing object data via the network (steps S603 and S607), and executes a predetermined process for the processing object data (step S605 and S609). As described above, the digital multi-function apparatus 3 stores not the entity of the processing object data but the storage location information 55 for the processing object data stored in the PC 1, when the apparatus operates in the power-saving mode.
Because the size of the storage location information 55 is very small compared to the amount of the entity of the processing object data, it is possible to decrease the storage capacity of the memory to which electric power is supplied in the power-saving mode. Furthermore, since the processing object data is acquired and the predetermined process is executed for the processing object data if the power-saving mode is cleared, it is possible to reduce the return number of the digital multi-function apparatus 3.

### [Other embodiments]

Although one example was described in the embodiment in which the storage location information 55 includes the information that identifies types of processing object data, the storage location information 55 does not necessarily have to include this information. In this case, it becomes impossible to execute the process of steps S602 through S603 and S606 through S607. However, the data acquisition section 36 may acquire all of the processing object data (at least one data of the print data 50 and the facsimile data 51) stored in the data storage section 21, and determine whether it is the print data 50 or the facsimile data 51.

Although, one PC (the PC 1) is connected to the LAN 4 in the network system according to the embodiment, a plurality of the PCs 1 may be connected.

Although the print output process (steps S602 through S605) is executed and then facsimile output process (steps S606 through S609) is executed in the embodiment, the facsimile output process may be executed before the print output process.

Although the PC 2 includes the data storage section 21 in the network system according to the embodiment, the PC 1 may include the data storage section as long as the digital multi-function apparatus 3 can access the data storage section of the PC 1.

Although in the above described embodiment, the return timing is notified to the PC 1 (step S503) after the digital multi-function apparatus 3 receives the storage location information 55, the present invention is not limited to this example. For example, the digital multi-function apparatus 3 may periodically notify the PC 1 of the return timing.

Above, although one embodiment according to the present invention was described, the above-described embodiment is just one example for working the present invention. Accordingly, the present invention is not limited to the above-described embodiment, and the above-described embodiment can be arbitrarily modified without departing from the scope of the present invention.

### INDUSTRIAL APPLICABILITY

The present invention can be widely applied to a digital multi-function apparatus connected to a communication device via a network.

### EXPLANATION OF REFERENCE

- 1,2: PC
- 3: digital multi-function apparatus
- 4: LAN
- 13: status confirmation section
- 21: data storage section
- 36: data acquisition section
- 37: facsimile data synthesis section
- 38: facsimile data edit section
- 39: process execution section
- 55: storage location information
- 50: print data
- 51: facsimile data
- 161: data transmission section
- 162: storage location information transmission section
- 352: return timing notification section
- 353: storage location information receiving section
- 354: storage location information memory
- 501: paper size information
- 511: output location information
- 515: synthesized facsimile data
- 516: output-location extracted facsimile data

## Claims

1. A digital multi-function apparatus configured to be connected to a communication device via a network, comprising:
a storage location information receiving section configured to receive storage location information of a processing object data stored by the communication device from the communication device if the apparatus operates in a power-saving mode;
a storage location information memory configured to store the storage location information received from the communication device if the apparatus operates in the power-saving mode;
a data acquisition section configured to access a data storage section in the network in which the processing object data is stored, and acquire the processing object data via the network, based on the storage location information in the storage location information memory if the power-saving mode is cleared; and
a process execution section configured to execute a predetermined process for the processing object data acquired by the data acquisition section; wherein
if the apparatus is operating in the power-saving mode, supply of electric power to the data acquisition section and the process execution section is suspended.

2. The digital multi-function apparatus according to claim 1,
wherein
the processing object data includes at least one of print data, and facsimile data including output location information that indicates an output location,
the data acquisition section is configured to acquire at least one of print data and facsimile data, and
the process execution section is configured to execute a print output process using the print data if the data acquisition section acquires the print data, and execute a facsimile output process using the facsimile data based on the output location information if the data acquisition section acquires the facsimile data.

3. The digital multi-function apparatus according to claim 2, further comprising
a facsimile data synthesis section configured to, if the data acquisition section acquires a plurality of facsimile data, create a synthesized facsimile data by synthesizing the facsimile data with each other having the same output location information from the plurality of facsimile data, wherein
the process execution section is configured to execute a facsimile output process using the synthesized facsimile data, based on the same output location information.

4. The digital multi-function apparatus according to claim 2, further comprising
a facsimile data edit section configured to extract a single output location information from the plurality of output location information, and create output-location extracted facsimile data including the extracted output location information if the facsimile data acquired by the data acquisition section includes a plurality of output location information, wherein
the process execution section is configured to execute a facsimile output process using the output-location extracted facsimile data based on the extracted output location information.

5. The digital multi-function apparatus according to claim 4, further comprising
a facsimile data synthesis section configured to create synthesized facsimile data by synthesizing facsimile data having the same output location information as the extracted output location information from the plurality facsimile data, and the output-location extracted facsimile data if the data acquisition section acquires a plurality of facsimile data, wherein
the process execution section is configured to execute a facsimile output process using the synthesized facsimile data, based on the extracted output location information.

6. The digital multi-function apparatus according to claim 2,
wherein
the print data includes paper size information that indicates paper size for print output,
the process execution section is configured to confirm printable sizes of the paper onto which the data can be output, and select the print data including paper size information corresponding to the sizes of the printable paper from the acquired plurality of the print data, and execute a print output process using the selected print data if the data acquisition section acquires a plurality of print data.

7. The digital multi-function apparatus according to any of claims 1 through 6, further comprising
a return timing notification section configured to notify the communication device of a timing when the power-saving mode is cleared, when the apparatus operates in the power-saving mode.

8. A network system comprising:
a communication device; and
a digital multi-function apparatus connected to the communication device via a network; wherein
the communication device includes:
a status confirmation section configured to confirm whether or not the digital multi-function apparatus operates in a power-saving mode;
a data transmission section configured to store a processing object data into the data storage section by transmitting the processing object data to a data storage section in the network if the status confirmation section confirms that the digital multi-function apparatus operates in the power-saving mode, and
a storage location information transmission section configured to transmit the storage location information of the processing object data to the digital multi-function apparatus,
the digital multi-function apparatus including:
a storage location information receiving section configured to receive the storage location information from the communication device if the apparatus operates in the power-saving mode;
a storage location information memory configured to store the received storage location information if the apparatus operates in the power-saving mode;
a data acquisition section configured to access the data storage section and acquire the processing object data via the network based on the storage location information in the storage location information memory if the power-saving mode is cleared;
a process execution section configured to execute a predetermined process for the processing object data acquired by the data acquisition section, wherein
if the apparatus is operating in the power-saving mode, supply of electric power to the data acquisition section and the process execution section is suspended.
